# EUROPÄISCHE PATENTANMELDUNG

(11) **EP 1 300 614 A2**
(43) Veröffentlichungstag der Anmeldung: **09.04.2003**
(21) Anmeldenummer: 02015833.3
(22) Anmeldetag: 16.07.2002
(51) Int. Cl.: F16H 61/28

(54) **Verfahren zum Auffinden einer Neutralstellung einer automatisierten Schaltung**

(30) Priorität: 02.10.2001 DE 10148666
(71) Anmelder: ROBERT BOSCH GMBH, 70442 Stuttgart (DE)
(72) Erfinder: Tumback, Stefan, 70469 Stuttgart (DE); Winter, Thomas, 71640 Ludwigsburg (DE)

(57) **Zusammenfassung**

Die vorliegende Erfindung betrifft ein Verfahren zum Auffinden einer Neutralposition (N) einer Schaltgabel (10) in einer automatisierten Schaltung, bei der eine Rastvorrichtung (1) mit einem vorgespannten Rastelement (5) in eine Neutralaussparung (7) für die Neutralposition (N) eingreift.

## Beschreibung

### Stand der Technik

Die vorliegende Erfindung betrifft ein Verfahren zum Auffinden einer Neutralposition einer Schaltgabel einer automatisierten Schaltung.

Es sind automatisierte Schaltgetriebe für Antriebe von Fahrzeugen mit mehreren Gängen bekannt. In diesen ist für jeden Gang ein Zahnradpaar vorhanden, wobei eines der beiden Räder über eine Schiebemuffe einer Schaltgabel mit der entsprechenden Welle verbunden werden kann. Die Schiebemuffe wird in der Regel über ein Schaltgestänge betätigt. Mit einer Schiebemuffe werden in der Regel zwei Gänge betätigt, sodass sich drei Positionen ergeben, nämlich eine erste Gangposition, eine Neutralstellung und eine zweite Gangposition. Um diese Positionen in Betrieb ohne eine äußere Positionsregelung halten zu können, sind die drei Positionen mittels einer Rastvorrichtung gesichert. Bei automatisierten Schaltgetrieben wird üblicherweise das Schaltgestänge durch einen Elektromotor betätigt, welcher außen am Getriebe angeflanscht ist.

Um die Funktion der Getriebeschaltung zu gewährleisten, müssen die drei Positionen der Schiebemuffe exakt eingestellt werden können. Bei manuell betätigten Getrieben wird dazu die Schiebemuffe vom Fahrer mit Hilfe des Schalthebels in die Nähe der Sollposition gebracht. Der Schalthebel wird anschließend freigegeben, sodass die getriebeinterne Raste die Schiebemuffe in ihre Sollposition bringen kann. In automatisierten Getrieben ist zum Einlegen der Gänge eine steife Ankopplung des Aktors erforderlich. Der Aktor kann das Schaltgestänge daher nicht freigeben. Daher muss die Sollposition durch den Aktor exakt angefahren werden. Dies erfordert eine genaue Kenntnis über die Lage der Sollpositionen. Üblicherweise werden daher zum Auffinden der Sollpositionen der Schiebemuffen eines automatisierten Getriebes diese in ihre Endlagen gebracht. Die Mitte zwischen den beiden Endlagen einer Schiebemuffe wird dann als die Neutralstellung definiert. Hierbei können sich jedoch in Folge von Toleranzen oder von Verschleiß an den Bauteilen Ungenauigkeiten beim Auffinden der Sollposition ergeben.

### Vorteile der Erfindung

Das erfindungsgemäße Verfahren zum Auffinden einer Neutralposition in einer automatisierten Schaltung hat demgegenüber den Vorteil, dass die Neutralstellung mit einer höheren Genauigkeit ermittelt werden kann. Ebenfalls können die anderen Sollpositionen der Schaltgabel, d.h. in der Regel zwei Positionen eingelegter Gänge, ebenfalls mit einer höheren Genauigkeit bestimmt werden. Erfindungsgemäß umfasst das Verfahren dabei die Schritte des Positionierens einer Schaltgabel in der ungefähren Neutralposition derart, dass sich eine Rastkugel einer Rastvorrichtung in einer beliebigen Position in einer Neutralaussparung befindet, welche die Neutralposition festlegt. Anschließend wird die Schaltgabel in eine erste Richtung mit einer vorbestimmten Kraft bewegt. Danach wird die Schaltgabel in eine zweite Richtung, entgegengesetzt der ersten Richtung mit der gleichen Kraft bewegt. Die Kraft wird dabei derart bestimmt, dass die Rastkugel nicht aus der Neutralaussparung bewegt wird. Die Schritte des Bewegens der Schaltgabel werden dabei so oft wiederholt, bis eine vorbestimmte Zeit abgelaufen ist oder bis eine vorbestimmte Anzahl von Bewegungen der Schaltgabel ausgeführt wurde. Durch die vorbestimmte Zeit bzw. die vorbestimmte Anzahl von Bewegungen wird sichergestellt, dass sich die Rastkugel dann mit Sicherheit in der Neutralposition befindet, sodass sich auch die Schaltgabel in ihrer Neutralposition befindet. Durch die wiederholte Ausführung der einander entgegengesetzten Bewegungen der Schaltgabel wird erreicht, dass sich die Rastkugel mit jeder Bewegung näher an ihre eigentliche Neutralposition annähert, bis sie sich schließlich in ihrer Neutralposition befindet. Aus dieser Neutralposition kehrt sie bei einer Bewegung in eine erste Richtung und einer anschließenden Bewegung in einer zweiten Richtung mit der gleichen Kraft wieder in die Neutralposition zurück, sodass die Neutralposition aufgefunden worden ist. Die Zeitdauer zur Wiederholung der Bewegungsschritte bzw. die vorbestimmte Anzahl der Bewegungsschritte wird dabei derart gewählt, dass ausgehend von einer am äußersten Rand der Neutralausnehmung angeordneten Rastkugel die Rastkugel nach Ablauf der vorbestimmten Zeit bzw. nach Durchführung der vorbestimmten Anzahl von Bewegungen in ihrer Neutralposition angeordnet ist. Vorzugsweise ist die Geometrie der Neutralausnehmung dabei derart gewählt, dass die Bewegungen einfach ausgeführt werden können.

Wenn sich die Rastkugel schon in der exakten Neutralstellung befindet, sind die durch die Rastkugel aufgebrachten Gegenkräfte in den beiden entgegengesetzten Richtungen gleich groß, sodass die Rastkugel immer wieder in ihre exakte Neutralstellung zurückkehrt. Wenn sich die Rastkugel nur in der ungefähren Neutralposition befindet (d.h. die Rastkugel ist in der Neutralaussparung angeordnet, jedoch nicht in der exakten Neutralposition, sondern links oder rechts von der exakten Neutralposition), sind die Gegenkräfte der Kugel bei einer entgegengesetzten Bewegungen unterschiedlich, sodass sich die Rastkugel mit jeder abschließenden Hin- und Herbewegung weiter an die exakte Neutralposition annähert.

In der Neutralposition der Schaltgabel greift eine Rastkugel einer Rastvorrichtung in eine Neutralaussparung für die Neutralposition exakt ein.

Vorzugsweise wird die Bewegung der Schaltgabel durch eine Antriebseinheit ausgeführt, welche die Schaltgabel auch zum Einlegen der Gangposition bewegt. D.h., wenn beispielsweise ein Elektromotor zum Einlegen der Gänge in der automatisierten Schaltung verwendet wird, wird dieser Elektromotor auch zum Auffinden der Neutralposition verwendet. Vorzugsweise wird der Elektromotor dabei mit einem Wechselstrom bestromt, sodass sich ein Wechselmoment ergibt, welches gleich große Kräfte in die beiden entgegengesetzten Bewegungsrichtungen der Schaltgabel bzw. der Schaltmuffe erzeugt.

Gemäß einer anderen bevorzugten Ausgestaltung der vorliegenden Erfindung wird die Bewegung der Schaltgabel durch eine zusätzliche Antriebseinheit ausgeführt. Vorzugsweise ist diese zusätzliche Antriebseinheit mittelbar oder unmittelbar an der Schaltgabel oder an einer Schaltstange, an welcher die Schaltgabel angeordnet ist, angreifend.

Um ein unnötiges Wiederholen der Verfahrensschritte des Bewegens der Schaltgabel in die beiden einander entgegengesetzten Richtungen zu vermeiden, wenn die exakte Neutralposition erreicht ist, ist vorzugsweise ein Sensorelement vorgesehen, welches erfassen kann, wenn die zurückgelegten Wege der Schaltgabel bzw. die Gegenkräfte der Rastkugel, ausgehend von der exakten Neutralposition in die erste Richtung und die zweite Richtung gleich sind.

Um bei jedem Neustart eines Motors eines Fahrzeugs die jeweiligen Neutralpositionen sicher bestimmen zu können, wird das erfindungsgemäße Verfahren vorzugsweise nach jedem Anlassen des Fahrzeugmotors ausgeführt.

Gemäß einer weiteren bevorzugten Ausgestaltung der vorliegenden Erfindung wird vor dem Abschalten des Fahrzeugmotors die Neutralposition der Schaltgabel bzw. der Schaltmuffe gespeichert. Da sich die Position üblicherweise nur elektrisch ändern kann, muss das erfindungsgemäße Verfahren nicht nach jedem Neustart des Motors ausgeführt werden, sondern z. B. nur nach einer Getriebemontage. Um einen sicheren Schaltvorgang zu gewährleisten, ist es jedoch bevorzugt, dass das erfindungsgemäße Verfahren zumindest nach jedem Neustart ausgeführt wird. Es ist erfindungsgemäß jedoch ebenfalls denkbar, dass das Verfahren auch während des Fahrens ausgeführt wird. Vorzugsweise wird die aufgefundene Neutralposition in einer Steuereinrichtung abgespeichert.

Gemäß einer bevorzugten weiteren Ausführung der vorliegenden Erfindung ist die Neutralausnehmung entweder in der Schaltmuffe oder in der Schaltstange angeordnet.

Vorteilhaft ist zwischen der Schaltgabel und der Antriebseinheit der automatisierten Schaltung ein elastisches Element angeordnet. Besonders bevorzugt sind elastische Elemente zu beiden Seiten der Schaltgabel angeordnet. Die elastischen Elemente können beispielsweise als Schraubenfedern oder Tellerfedern ausgebildet sein.

Vorzugsweise ist die Antriebseinheit als Linearmotor ausgebildet oder die Antriebseinheit ist als eine Baueinheit, umfassend einen Rotationsmotor und eine Antriebsspindel, ausgebildet. Besonders bevorzugt ist dabei in der Baueinheit zwischen dem Rotationsmotor und der Antriebsspindel noch ein Getriebe angeordnet.

Das erfindungsgemäße Verfahren kann somit auf einfache und schnelle Weise eine exakte Positionierung des automatischen Getriebes in der Neutralstellung ermöglichen. Hierbei kann die Neutralstellung sowie auch Sollpositionen von eingelegten Gängen exakt bestimmt werden. Weiterhin müssen zum Einlernen des Getriebes in einer Initialisationsphase nicht alle Gänge eingelegt werden. Vielmehr ist es möglich, die exakten Positionen aller Schiebemuffen schnell und genau aufzufinden, wenn die ungefähre Lage der Schiebemuffen bekannt ist. Die ungefähren Positionen können beispielsweise entweder durch Antasten von Endanschlägen der Schiebemuffe oder durch die Schaltmimik ermittelt werden. Ebenfalls ist es möglich, dass die ungefähren Positionen beispielsweise aus einem Speicher vom vorangegangenen Fahrzeugbetrieb übernommen werden.

### Beschreibung der Ausführungsbeispiele

Nachfolgend werden mehrere Ausführungsbeispiele der Erfindung unter Bezugnahme auf die beigefügten Zeichnungen erläutert. Es zeigt:
- Figur 1: eine schematische Schnittansicht einer Rastvorrichtung in einer ungefähren Neutralposition in einer Schaltmuffe,
- Figur 2: eine schematische Schnittansicht der Rastvorrichtung in der exakten Neutralposition,
- Figur 3: eine schematische Blockansicht einer Vorrichtung zur Durchführung des erfindungsgemäßen Verfahrens,
- Figur 4: eine schematische Schnittansicht eines automatisierten Getriebes gemäß einem ersten Ausführungsbeispiel, in welchem das erfindungsgemäße Verfahren durchführbar ist, und
- Figur 5: eine schematische Schnittansicht eines automatisierten Getriebes gemäß einem zweiten Ausführungsbeispiel, in welchem das erfindungsgemäße Verfahren durchführbar ist.

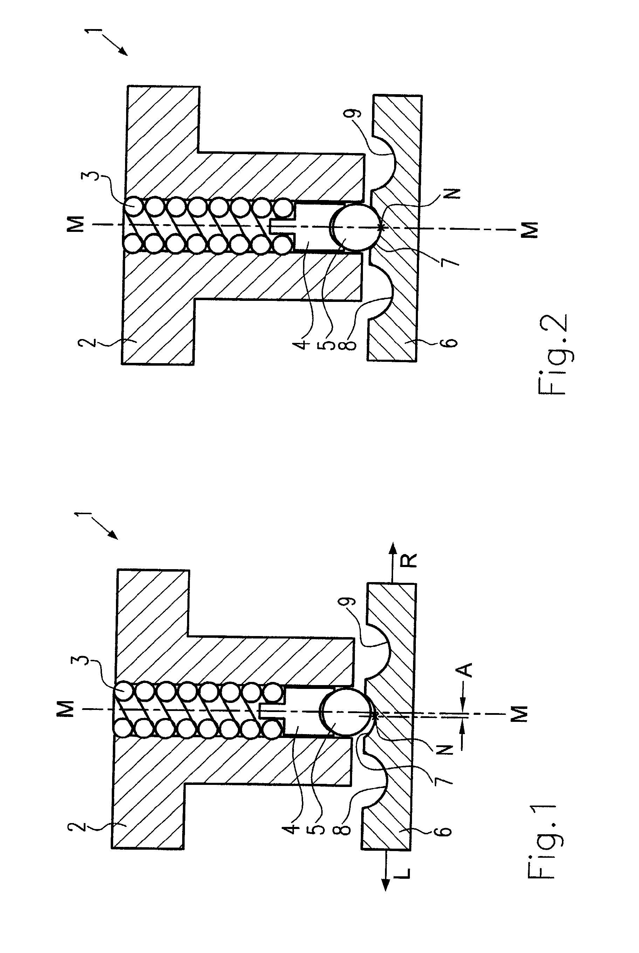

Nachfolgend wird unter Bezugnahme auf die Figuren 1 bis 4 eine automatisierte Schaltung gemäß einem ersten Ausführungsbeispiel beschrieben, mit welcher das erfindungsgemäße Verfahren durchführbar ist.

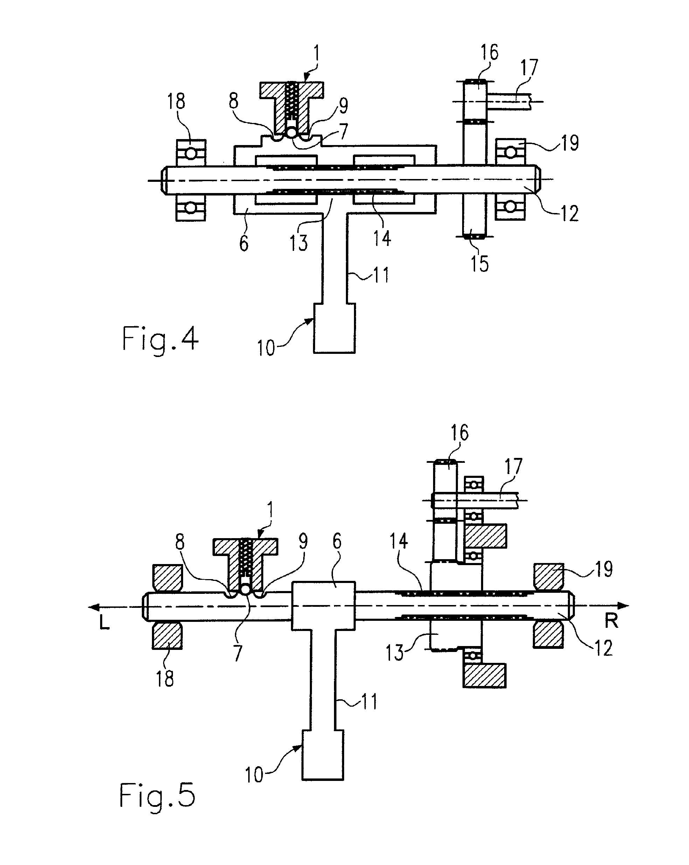

Insbesondere, wie in Figur 4 gezeigt, umfasst die automatisierte Schaltung eine Schaltstange 12, auf welcher eine Schaltgabel 10 angeordnet ist. Die Schaltgabel 10 besteht aus einem Hebel 11 sowie einer Schaltmuffe 6. Im Innern der Schaltmuffe 6 ist integral eine Spindelmutter 13 ausgebildet. Die Spindelmutter 13 greift mit einer an der Schaltstange 12 ausgebildeten Spindel 14 ein. Am äußeren Umfang der Schaltmuffe 6 ist eine Rastvorrichtung 1 angeordnet, welche in verschiedene, kanalartige Aussparungen 7, 8, 9 eingreifen kann, die am Außenumfang der Schaltmuffe 6 gebildet sind. Die Schaltstange 12 ist drehbar an zwei Lagern 18 und 19 gelagert und über ein Zahnrad 15 und ein Zahnrad 16 mit einer Welle 17 verbunden. Die Welle 17 ist in bekannter Weise mit einer nicht dargestellten Antriebseinheit verbunden, welche durch Antreiben der Welle 17 und über die beiden Zahnräder 16 und 15 der Schaltstange 12 ein Verschieben des Schalthebels 10 in Längsrichtung der Schaltstange 12 ermöglicht. Dadurch greift die ortsfeste Rastvorrichtung 1 jeweils in eine unterschiedliche Aussparung 7, 8, 9 in bekannter Weise ein, um einen entsprechenden Gang einzulegen bzw. eine Neutralstellung einzunehmen.

In den Figuren 1 und 2 ist die Schaltmuffe 6 und die Rastvorrichtung 1 in vergrößertem Maßstab dargestellt. Wie in den Figuren 1 und 2 gezeigt, umfasst die Rastvorrichtung 1 ein buchsenförmiges Gehäuse 2, in welchem in einer mittigen Durchgangsbohrung eine Feder 3, ein Zwischenelement 4 sowie eine Rastkugel 5 angeordnet sind. Die Feder 3 spannt die Rastkugel 4 nach unten vor.

Wie aus den Figuren 1 und 2 ersichtlich ist, sind in der Muffe 6 drei kanalförmige Aussparungen 7, 8 und 9 ausgebildet. Die Aussparung 7 ist dabei an der Neutralposition der Schaltmuffe 6 ausgebildet und die beiden Aussparungen 8 und 9 sind jeweils an Positionen angeordnet, an welchen ein Gang eingelegt ist. D.h., wenn sich die Schaltmuffe 6 an der Position befindet, in der die Rastvorrichtung 1 in der Ausnehmung 7 positioniert ist, befindet sich die automatisierte Schaltung in ihrer Neutralstellung.

Nachfolgend wird das erfindungsgemäße Verfahren beschrieben. Gemäß dem erfindungsgemäßen Verfahren zum Auffinden einer Neutralposition einer Schaltgabel 10 in einer automatisierten Schaltung muss in einem ersten Schritt die Schaltgabel 10 in einer ungefähren Neutralposition angeordnet sein. Eine derartige Position ist beispielsweise in Figur 1 dargestellt. Erfindungsgemäß wird dabei unter dem Begriff "ungefähre Neutralposition" eine Position verstanden, bei der sich die Rastkugel 5 der Rastvorrichtung in einer beliebigen Position in einer Neutralaussparung 7 in der Muffe 6 befindet.

Wenn somit die Schaltgabel 10 in der ungefähren Neutralposition angeordnet ist, wird die Schaltgabel 10 erfindungsgemäß in eine erste Richtung L mit einer vorbestimmten Kraft durch Antreiben der Antriebseinheit bewegt. Anschließend wird die Schaltgabel 10 in eine zweite Richtung R entgegengesetzt der ersten Richtung L mit der gleichen Kraft wie im vorherigen Schritt bewegt. D.h., ausgehend von der in Figur 1 dargestellten Position, wird die Schaltmuffe 6 mit einer vorbestimmten Kraft in Richtung des Pfeils L nach links bewegt. Dabei ergibt sich auf Grund der vorgespannten Rastkugel 5 und der Position an einem oberen Bereich der teilkreisförmigen Aussparung 7 eine starke Gegenkraft von der Rastvorrichtung 1, sodass sich die Schaltmuffe 6 nur um einen geringen Betrag in Richtung des Pfeils L bewegt. Anschließend wird die Schaltmuffe 6 mit der gleichen Kraft in die entgegengesetzte Richtung R bewegt. Dabei unterstützt die vorgespannte Rastkugel 3 der Rastvorrichtung 1 und die Geometrie der Aussparung 7 die Bewegung der Schaltmuffe 6, sodass sich die Schaltmuffe 6 um einen größeren Längenbetrag in Richtung des Pfeils R nach rechts bewegt. Somit befindet sich die Schaltgabel 10 nach Abschluss der beiden Bewegungen zuerst nach links und anschließend nach rechts in einer Position, in welcher die Schaltmuffe 6 weiter rechts angeordnet ist, sodass sich die Schaltmuffe 6 an der Rastvorrichtung 1 in Richtung auf ihre exakte Neutralposition N bewegt hat.

Mit anderen Worten hat sich der Abstand A zwischen der Neutralposition N und der Mittellinie M-M der Rastvorrichtung 1 etwas verringert. Diese beiden Schritte des Bewegens in Richtung des Pfeils L und anschließend in Richtung des Pfeils R werden somit eine bestimmte Zeit lang wiederholt, bis sich die Rastkugel 5 in der exakten Neutralposition N befindet. Diese Position ist in Figur 2 dargestellt. In der exakten Neutralposition fällt dabei der Punkt N mit der Mittelachse M-M der Rastvorrichtung 1 zusammen (vgl. Figur 2).

Es sei angemerkt, dass an Stelle der Wiederholung der beiden Bewegungsschritte in Richtung L und R im Umfang einer vorbestimmten Zeit auch eine vorbestimmte Anzahl von Bewegungen in die beiden Richtungen L und R ausgeführt werden kann. Es ist dabei jeweils nur sicherzustellen, dass nach der vorbestimmten Zeit bzw. der vorbestimmten Anzahl von Bewegungen die Rastkugel 5 sicher in der Neutralposition N der Schaltmuffe 6 angeordnet ist. Erfindungsgemäß ist es dabei unerheblich, wenn sich die Rastkugel 5 schon vor Abschluss der vorbestimmten Zeit bzw. vor Abschluss der vollständigen Anzahl der Bewegungen in der Neutralposition N befindet, da sich dann die Muffe 6 jeweils um den gleichen Betrag nach links bzw. rechts bewegt, sodass sich die Muffe 6 nach den beiden Bewegungsschritten wieder in ihrer Neutralposition befindet.

Hierbei ist es jedoch bevorzugt, dass beispielsweise eine Sensoreinrichtung vorgesehen wird, welche bestimmen kann, wann die jeweils in Richtung L und R zurückgelegten Wege oder Gegenkräfte der Muffe 6 gleich sind, sodass das erfindungsgemäße Verfahren vor Erreichen der vorbestimmten Zeit bzw. vor Durchführen der vorbestimmten Anzahl der Bewegungen beendet werden kann.

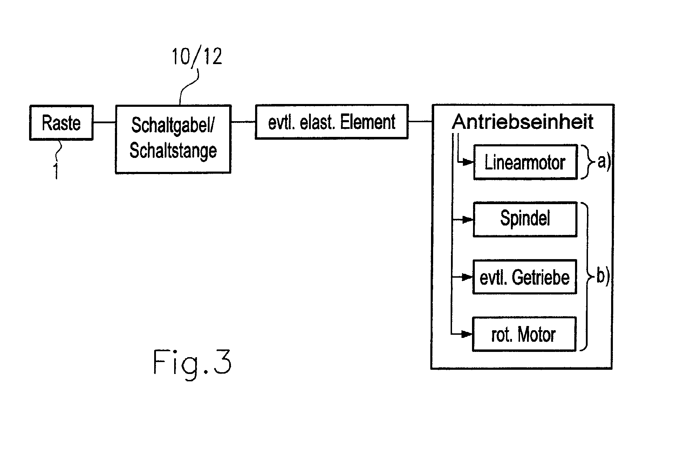

In Figur 3 ist eine schematische Blockdarstellung eines Aufbaues zur Durchführung des erfindungsgemäßen Verfahrens dargestellt. Hierbei steht die Rastvorrichtung 1 mit der Schaltgabel 10 bzw. Schaltstange 12 in Verbindung. Zwischen der Schaltgabel 10 bzw. der Schaltstange 12 und der Antriebseinheit kann dabei noch ein elastisches Element vorgesehen werden. Das elastische Element beeinflusst das erfindungsgemäße Verfahren nicht. Die Antriebseinheit kann beispielsweise als a) Linearmotor ausgebildet sein oder als b) Baueinheit, bestehend aus einem rotierenden Motor, welcher eine Spindel antreibt. Dabei kann zwischen dem rotierenden Motor und der Spindel noch zusätzlich ein Getriebe geschaltet sein.

Das erfindungsgemäße Verfahren ermöglicht es somit, die Neutralstellung N der Schaltmuffe 6 bzw. der Schaltgabel 10 mit einer hohen Genauigkeit in einer äußerst kurzen Zeit zu ermitteln. Weiterhin können auch die Positionen der eingelegten Gänge in den Aussparungen 8 und 9 exakt bestimmt werden. Somit kann erfindungsgemäß auf eine aufwendige Sensoreinrichtung zur exakten Positionsbestimmung der Schaltmuffe verzichtet werden. Die ungefähre Position der Schaltmuffe kann dabei einfach beispielsweise mittels Antasten der Endanschläge der Schiebemuffe 6 bestimmt werden.

In Figur 5 ist eine automatisierte Schaltung gemäß einem zweiten Ausführungsbeispiel der vorliegenden Erfindung dargestellt. Gleiche bzw. funktional gleiche Teile sind dabei mit den gleichen Bezugszeichen wie im ersten Ausführungsbeispiel bezeichnet.

Wie in Figur 5 gezeigt, ist im Unterschied zum ersten Ausführungsbeispiel beim zweiten Ausführungsbeispiel eine separate Spindelmutter 13 vorgesehen, welche über ein Zahnrad 16 mit der Antriebswelle 17 verbunden ist. Der Schalthebel 10 ist fest mit der Schaltstange 12 verbunden, sodass die an den Lagern 18 und 19 gelagerte Schaltstange bei einem Antreiben der Antriebswelle 17 nach links bzw. nach rechts verschoben werden kann.

Wie weiter in Figur 5 gezeigt, sind die Aussparungen 7, 8 und 9 für die Neutralposition bzw. zwei Gänge des Getriebes unmittelbar auf der Schaltstange 12 ausgebildet. Das erfindungsgemäße Verfahren wird dabei entsprechend der zum ersten Ausführungsbeispiel gegebenen Beschreibung durchgeführt, indem die Schaltstange 12 zuerst in der ungefähren Neutralposition angeordnet wird, in der die Rastvorrichtung 1 an einer beliebigen Position in der Neutralaussparung 7 positioniert wird. Anschließend wird die Schaltstange 12 zuerst in Richtung des Pfeils L mit einer vorbestimmten Kraft bewegt und anschließend in Richtung des Pfeils R mit der gleichen vorbestimmten Kraft bewegt und diese Bewegungen wiederholt, bis eine gewisse Zeit abgelaufen ist bzw. die beiden Schritte zum Bewegen der Schaltstange 12 eine gewisse Anzahl von Malen ausgeführt wurde. Somit kann die Neutralposition in gleicher Weise wie im ersten Ausführungsbeispiel bestimmt werden.

Bei den beiden dargestellten Ausführungsbeispielen wird zum Ausführen der Bewegungen des erfindungsgemäßen Verfahrens in Richtung L und R jeweils der schon vorhandene Elektromotor zum Einnehmen der Position des Getriebes verwendet, welcher die Antriebswelle 17 antreibt. Dadurch kann auf eine zusätzliche Antriebseinheit zur Durchführung des erfindungsgemäßen Verfahrens verzichtet werden, wodurch insbesondere die Kosten für die automatisierte Schaltung nicht ansteigen.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren zum Auffinden einer Neutralposition (N) einer Schaltgabel (10) in einer automatisierten Schaltung, bei der eine Rastvorrichtung (1) mit einem vorgespannten Rastelement (5) in eine Neutralaussparung (7) für die Neutralposition (N) eingreift, umfassend die Schritte:
a) Positionieren der Schaltgabel (10) bzw. einer Schaltstange (12) in die ungefähre Neutralposition, sodass sich das Rastelement (5) in einer beliebigen Position in der Neutralaussparung (7) befindet,
b) Bewegen der Schaltgabel (10) bzw. der Schaltstange (12) in einer ersten Richtung (L) mit einer vorbestimmten Kraft,
c) Bewegen der Schaltgabel (10) bzw. der Schaltstange (12) in eine zweite Richtung (5) entgegengesetzt der ersten Richtung (L) mit der gleichen Kraft, und
d) Wiederholen der Schritte b) und c), bis eine vorbestimmte Zeit abgelaufen ist oder bis eine vorbestimmte Anzahl von Bewegungen der Schaltgabel (10) bzw. der Schaltstange (12) ausgeführt ist.

2. Verfahren nach Anspruch 1, **dadurch gekennzeichnet, dass** die Bewegung der Schaltgabel (10) bzw. der Schaltstange (12) durch eine Antriebseinheit ausgeführt wird, welche auch zum Einlegen der Gangpositionen der automatisierten Schaltung verwendet wird.

3. Verfahren nach Anspruch 1, **dadurch gekennzeichnet, dass** die Bewegungen der Schaltgabel (10) bzw. der Schaltstange (12) durch eine zusätzliche Antriebseinheit ausgeführt werden.

4. Verfahren nach Anspruch 3, **dadurch gekennzeichnet, dass** die zusätzliche Antriebseinheit unmittelbar oder mittelbar an der Schaltgabel (10) oder der Schaltstange (12) angreift.

5. Verfahren nach einem der Ansprüche 1 bis 4, **dadurch gekennzeichnet, dass** ein Sensorelement vorgesehen ist, um das Auffinden der Neutralposition (N) zu erfassen und das Verfahren zu beenden, wenn die Neutralposition (N) eingenommen ist.

6. Verfahren nach einem der Ansprüche 1 bis 5, **dadurch gekennzeichnet, dass** das Verfahren nach jedem Anlassen des Fahrzeugmotors ausgeführt wird.

7. Verfahren nach einem der Ansprüche 1 bis 6, **dadurch gekennzeichnet, dass** vor dem Abschalten des Fahrzeugmotors die aufgefundene Neutralposition (N) gespeichert wird.

8. Verfahren nach einem der Ansprüche 1 bis 7, **dadurch gekennzeichnet, dass** die Neutralausnehmung (7) in der Schaltmuffe (6) oder in der Schaltstange (12) angeordnet ist.

9. Verfahren nach einem der Ansprüche 1 bis 8, **dadurch gekennzeichnet, dass** zwischen der Antriebseinheit und dem durch die Antriebseinheit bewegten Bauteil ein elastisches Element angeordnet ist.

10. Verfahren nach einem der Ansprüche 1 bis 9, **dadurch gekennzeichnet, dass** die Antriebseinheit (1) als Linearmotor oder als Baueinheit, umfassend einen Rotationsmotor und eine Antriebsspindel, ausgebildet ist.
